**Europäisches Patentamt**

**European Patent Office**

**Office européen des brevets**

(19)

(11) Numéro de publication: **0178213**
**B1**

(12) # FASCICULE DE BREVET EUROPEEN

(45) Date de publication du fascicule du brevet:
**30.03.88**

(21) Numéro de dépôt: **85401853.8**

(22) Date de dépôt: **24.09.85**

(51) Int. Cl.⁴: **C 09 K 17/00**, C 04 B 28/18,
C 04 B 28/26

(54) **Coulis granulaire durcissable à base de produits minéraux et procédé de consolidation et/ou d'étanchement de sols granulaires fins et de sols finement fissurés utilisant ce coulis.**

(30) Priorité: **12.10.84 FR 8415659**

(43) Date de publication de la demande:
**16.04.86 Bulletin 86/16**

(45) Mention de la délivrance du brevet:
**30.03.88 Bulletin 88/13**

(84) Etats contractants désignés:
**AT BE CH DE FR GB IT LI LU NL SE**

(56) Documents cités:
**EP - A - 0 010 472**
**EP - A - 0 078 119**
**DE - A - 3 315 357**
**FR - A - 2 528 441**

(73) Titulaire: **SONDAGES INJECTIONS FORAGES "S.I.F."**
**ENTREPRISE BACHY, 90-92, Rue Baudin,**
**F-92300 Levallois-Perret (FR)**

(72) Inventeur: **Gandais, Michel Auguste Georges, 36, rue**
**d'Etrelles Saint Sauveur Sur Ecole, F-77930 Perthes (FR)**
Inventeur: **Delmas, Francis Marcel Louis, 19, Avenue de**
**Choisy, F-75643 Paris Cedex 13 (FR)**
Inventeur: **Lacour, Yves Marie François R., 25, rue des**
**Vallées, F-92290 Chatenay Malabry (FR)**

(74) Mandataire: **de Boisse, Louis et al, CABINET DE**
**BOISSE 37, Avenue Franklin D. Roosevelt, F-75008 Paris**
**(FR)**

# Description

L'invention concerne un coulis granulaire durcissable à base de produits minéraux et un procédé de consolidation et/ou d'étanchement de sols granulaires fins et de sols finement fissurés utilisant ce coulis.

Le traitement des sols par injection consiste à remplir les vides intergranulaires des terrains granulaires ou les fissures d'un terrain fissuré avec des coulis de nature diverse destinés à modifier les caractéristiques du terrain ainsi traité.

Les modifications portent généralement sur une amélioration des propriétés mécaniques des terrains dans le cas d'un traitement de consolidation, ou sur une diminution de la perméabilité dans le cas d'un traitement d'étanchement. Il est fréquent qu'un traitement par injection soit destiné à modifier les deux propriétés.

Pour des raisons techniques, historiques et économiques, les vides les plus importants d'un terrain à traiter sont remplis avec des coulis constitués par une suspension granulaire dans l'eau de matériaux présentant des propriétés de liants hydrauliques, associés éventuellement à des matériaux colloïdaux et/ou à des matériaux destinés avant tout à augmenter la quantité de matière solide au sein du coulis.

A titre d'exemple, on peut citer comme matériaux présentant des propriétés de liant hydraulique:
— les ciments hydrauliques tels que les ciments Portland sans ou avec constituants secondaires,
— les ciments à base de laitier de haut fourneau,
— les ciments alumineux.

Comme matériaux colloïdaux les plus fréquemment utilisés on peut citer:
— les argiles naturelles et plus particulièrement celles qui contiennent de la montmorillonite et qui sont appelées couramment bentonite.

Comme matériaux destinés à augmenter la quantité de matière solide dans les coulis, et fréquemment utilisés en injections on citera:
— les sables,
— les cendres volantes provenant de centrales thermiques consommant du charbon,
— des charges provenant d'exploitation de carrières et qui peuvent être calcaires et/ou siliceuses,
— des matériaux naturels divers, tels que des cendres volcaniques, des tufs volcaniques, etc.

Différents critères permettent de quantifier la finesse d'un matériau granulaire et parmi ceux-ci on peut mentionner leur surface spécifique (B.E.T. ou Blaine). A titre indicatif, les ciments utilisés couramment pour l'injection de terrains ont une surface spécifique comprise généralement entre 2500 cm²/g et 4500 cm²/g. Certains ciments spécialement traités pour obtenir une grande finesse peuvent cependant avoir une surface spécifique qui dépasse légèrement les 5000 cm²/g. Les cendres volantes ont une surface spécifique généralement comprise entre 2500 et 4500 cm²/g.

Les coulis formés des matériaux susmentionnés, dont la mise en suspension est souvent stabilisée par une addition de faibles quantités de colloïdes argileux, sont fréquemment utilisés pour le traitement par injections de terrains alluvionnaires. Ils permettent l'imprégnation de terrains granulaires comportant des graviers et des sables dont le coefficient de perméabilité à l'eau, qui est considéré comme une caractérisation de la distribution et de la dimension des vides, est au moins de $5 \times 10^{-4}$ m/s à $1 \times 10^{-3}$ m/s, selon le type de coulis. Ces coulis, ayant un caractère de liant hydraulique, sont utilisés pour des traitements de consolidation et/ou d'étanchement.

Des terrains de granularité plus fine et présentant un coefficient de perméabilité à l'eau inférieur à $5 \times 10^{-4}$ m/s peuvent être pénétrés par des coulis dont les seuls grains sont des grains argileux, tels que les coulis de bentonite défloculée. Les bentonites peuvent être rigidifiées in situ par l'intermédiaire d'additifs chimiques divers, la résistance mécanique obtenue avec ce type de coulis est cependant très faible si bien qu'il est utilisé uniquement pour des traitements d'étanchement.

L'invention vise à fournir un nouveau coulis granulaire durcissable injectable utile pour consolider et/ou étancher des terrains ayant un coefficient de perméabilité à l'eau inférieur à ceux des terrains pouvant être traités par les coulis actuellement connus.

Le coulis de l'invention présente les particularités suivantes:
— les composants granulaires présentent une finesse nettement supérieure à celle des matériaux utilisés couramment pour la préparation des coulis,
— pris individuellement chacun d'entre eux ne présente pas le caractère de liant hydraulique,
— leur incorporation au sein d'un même coulis engendre une réaction de combinaison, de caractère pouzzolanique, qui produit la prise et le durcissement du coulis,
— chacun des composants est minéral,
— si désiré, on peut accélérer le durcissement du coulis à l'aide d'un activateur qui est également minéral.

Plus particulièrement, l'invention concerne un coulis aqueux granulaire, durcissable injectable, caractérisé en ce qu'il comprend, comme ingrédients essentiels, (a) de fines particules de silice amorphe, communément appelées fumée de silice, ayant une surface spécifique d'au moins 5 m²/g, et (b) de fines particules de chaux éteinte ayant une surface spécifique Blaine d'au moins 8000 cm²/g.

L'invention concerne également un procédé de consolidation et/ou d'étanchement de sols granulaires fins et de sols finement fissurés par injection dans ces sols d'un coulis aqueux granulaire durcissable, caractérisé en ce que ledit coulis est un coulis selon l'invention.

Le constituant (a) est un matériau industriel appelé couramment «fumée de silice». Ce matériau est un sous-produit de l'industrie du silicium et de ferro-silicium et qui se caractérise par une grosseur de particules très petite (inférieure à 0,2 μm en moyenne) et par une forte teneur en silice amorphe. Les valeurs habituelles de la composition chimique se situent dans les fourchettes suivantes (elles incluent le fait que la fumée de silice peut provenir de la fabrication de silicium seul ou de ferro-silicium de différentes teneurs en silicium):

| SiO$_2$ | 86 à 98% en poids |
|---|---|
| Fe$_2$O$_3$ | 0,02 à 5 |
| Al$_2$O$_3$ | 0,1 à 3 |
| CaO | 0,08 à 0,5 |
| MgO | 0,2 à 3,5 |
| Na$_2$O | 0,1 à 1,8 |
| K$_2$O | 0,2 à 3,5 |
| S | 0,1 à 0,4 |

La finesse des particules est commodément caractérisée par leur surface spécifique qui doit être supérieure à 5 m$^2$/g, de préférence supérieure à 10 m$^2$/g. Des fumées de silice disponibles dans le commerce ayant une surface spécifique de 18 à 22 m$^2$/g se sont révélées particulièrement convenables mais des silices à surface spécifique plus élevée pourraient être utilisées aussi.

Le constituant (b) est de la chaux étainte, caractérisé par une teneur en hydroxyde de calcium Ca(OH)$_2$ supérieure à 90%. Ce matériau peut être obtenu avec une granulométrie très fine et une surface spécifique Blaine qui est supérieure à 8000 cm$^2$/g. Par l'application de traitements appropriés soit pendant l'élaboration soit après la fabrication de la chaux étainte, il est possible d'obtenir des matériaux de finesse supérieure qui seront avantageusement utilisés. Ces traitements permettent d'obtenir aisément des chaux de finesse Blaine atteignant ou dépassant les 20 000 cm$^2$/g. On utilise avantageusuement une chaux dont la surface spécifique Blaine est supérieure à 10 000 cm$^2$/g.

Les dosages possibles couvrent une vaste gamme de concentrations en matières solides et vont du coulis extrêmement fluide qui peut comporter moins d'une centaine de kilogrammes de matières solides au mètre cube de coulis, destiné préférentiellement à l'injection des terrains granulaires fins ou des terrains finement fissurés, jusqu'au coulis épais pouvant contenir jusqu'à 350 kg environ de matières solides par m$^3$ de coulis.

Le rapport pondéral chaux/silice peut varier, par exemple, entre 0,2 et 5, de préférence entre 0,2 et 2. Le rapport optimal pourra être déterminé facilement, en fonction des ingrédients particuliers utilisés et du résultat recherché, sur des échantillons d'éssai. Il se situe, dans les exemples donnés ci-après, vers 0,5, pour ce qui est de la résistance en compression. Toutefois, des considérations économiques, la chaux étant bien meilleur marché que la fumée de silice, peuvent conduire à préférer utiliser une proportion de chaux plus élevée que celle qui donne les meilleures résistances mécaniques, notamment lorsque l'étanchement est la préoccupation principale.

Bien que l'utilisation d'un activateur ne soit pas nécessaire pour développer la réaction de durcissement de la combinaison silice-chaux, il peut être désirable d'utiliser un activateur pour accélérer le durcissement du coulis dans le cas où l'on souhaite raccourcir le délai de mise en charge du terrain injecté. Comme activateur on peut utiliser une matière basique, comme l'hydroxyde de sodium NaOH (préféré), des silicates de soude de rapports pondéraux divers, du carbonate de sodium, de la potasse, etc. Ces activateurs peuvent être utilisés seuls ou sous forme de mélange. La proportion en poids d'activateur sera comprise habituellement entre 0 et 5% environ par rapport au poids de chaux.

Si désiré, de façon optionnelle, on peut incorporer au coulis de l'invention une charge de finesse élevée, d'une surface spécifique Blaine au moins égale à 8000 cm$^2$/g, qui peut être inerte ou présenter une certaine réactivité intrinsèque en raison de son état de division élevée. Cette réactivité intrinsèque peut être mise à profit pour influer sur le temps de prise, sur l'évolution de la résistance dans le temps et sur l'économie des coulis. Un exemple d'une telle charge réactive est le carbonate de calcium.

Les coulis sont préparés, de façon classique, dans un malaxeur où sont mélangés l'eau, la «fumée de silice» qui peut être sous forme pulvérulente sèche ou déjà sous la forme d'une suspension concentrée dans de l'eau, la chaux et le ou les activateurs éventuels.

Les coulis obtenues ressemblent aux coulis classiques à base de ciment et peuvent faire l'objet des mesures classiques de viscosité, décantation, ressuage, densité, temps de prise, évolution de la résistance mécanique avec le temps, etc.

Ces coulis peuvent ainsi être mis en oeuvre avec le même type de matériel que celui utilisé couramment en travaux d'injection de coulis à suspension granulaire.

Ce nouveau type de coulis, de par la grande finesse des grains composant la suspension, présente un grand intérêt pour le traitement par injections des terrains granulaires ou fissurés: il permet, en effet, de pratiquer des traitements d'étanchement mais surtout de consolidation dans des terrains granulaires fins qu'il n'est pas possible d'imprégner avec des coulis classiques de consolidation à base de ciment, de cendres volantes, etc.

Ce type de coulis permet d'abaisser la limite inférieure de perméabilité des terrains granulaires imprégnables, typiquement jusqu'à 10$^{-5}$ m/s environ, et ceci peut intéresser une proportion très importante, voire totale, des terrains alluvionnaires que l'on ne savait pas traiter jusqu'à présent avec les coulis connus.

En résumé, ce nouveaau type de coulis présente les particularités et avantages suivants:
— il est composé d'une suspension dans l'eau de «fumée de silice» et de chaux éteinte dans des proportions déterminées. Il ne contient ni ciment Portland, ni ciment de laitiers, ni bentonite comme la plupart des coulis classiques,
— prises individuellement, la «fumée de silicé» et la chaux éteinte ne sont pas des liant hydrauliques. La Demanderesse a trouvé, de façon surprenante, que leur combinaison au sein de coulis conduit à un phénomène de prise et de durcissement,
— en traitement de consolidation et/ou d'étanchement, il peut imprégner des sols granulaires fins ou finement fissurés qui ne peuvent pas être traités par les coulis classiques,
— le durcissement peut, si dérisé, être accéléré par l'incorporation d'un ou de plusieurs activateurs,
— tous les composants sont matériaux. L'absence de tout produit organique présente un grand intérêt pour le traitement de sites où des contraintes de protection de l'environnement et d'écologie exigent une telle absence.

Les exemples non limitatifs suivants sont donnés en vue d'illustrer davantage la présente invention.

On a préparé, dans un malaxeur du commerce, des coulis dosés à 175 et 225 kg de matières solides par $m^3$ de coulis, en faisant varier le rapport en poids chaux/silice de 0,2 à 5, un activateur, constitué par 5% en poids de NaOH par rapport au poids de chaux utilisée, étant ajouté, dans certains des coulis. On a moulé ces coulis à la forme d'éprouvettes et on a mesuré leur résistance à la compression (en bars) au bout de 7, 14 et 28 jours.

La fumée de silice utilisée était le type silica 100 de la Société Elkem A/S, Oslo, Norvège. Cette silice, d'une surface spécifique de 18 à 22 $m^2$/g, présentait l'analyse chimique suivante, en poids: 94-98% de $SiO_2$, 0,02-0,15% de $Fe_2O_3$, 0,1-0,4% de $Al_2O_3$, 0,08-03,% de CaO, 0,2-0,9% de MgO, 0,1-0,4% de $Na_2O$, 0,2-0,7% de $K_2O$ et 0,1-0,3% de S.

La chaux éteinte utilisée était de la chaux aérienne éteinte, communément appelée fleur de chaux, provenant des Etablissements Bonargent-Goyon, 36800 Saint-Gaultier, France.

Cette chaux présentait l'analyse chimique suivante, en poids: 93,6% de $Ca(OH)_2$, 3,6% de $CaCO_3$, 1,6% de $CO_2$, 0,3% de $SiO_2$, 0,13% de $Al_2O_3$, 0,10% de $Fe_2O_3$ et 0,28% de MgO. Sa surface spécifique Blaine était de 10 000 $cm^2$/g environ.

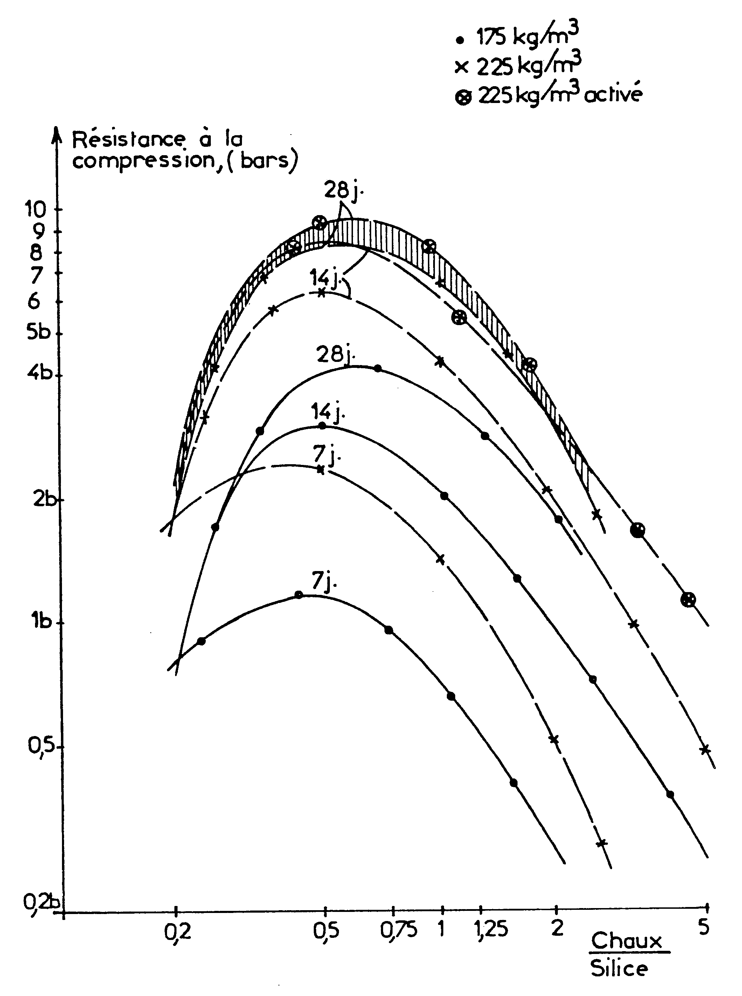

Les résultats obtenus ont été reportés sous la forme de courbes sur la figure unique qui est un graphique donnant la résistance à la compression, en bars, en fonction du rapport chaux/silice pour les divers coulis essayés. On voit d'après ces courbes que le rapport chaux/silice optimal se situe à 0,5 environ, que la résistance à la compression s'accroît avec la teneur en matières solides du coulis, ainsi qu'avec le temps de durcissement. Egalement, on voit que la présence d'un activateur, en accélérant le durcissement, permet d'atteindre plus rapidement un niveau donné de résistance à la compression.

Il est à noter, enfin, que le coulis de l'invention peut être également utilisé comme matériau de remplissage de coupures d'étanchéité réalisées dans les sols. Ces coupures peuvent être exécutées sous la forme d'une tranchée réalisée par un outillage qui procède à une extraction de terrain qui est remplacé par le coulis ou sous la forme d'une succession d'empreintes laissées par un outil foncé dans le sol, empreintes qui sont remplies de coulis lors de l'extraction de l'outil.

Un intérêt particulier de ce coulis réside dans le fait qu'il ne contient pas de matériaux argileux. Il peut donc être utilisé notamment dans les cas où le liquide, qui tend à percoler à travers la coupure d'étanchéité, a un comportement agressif à l'égard des matériaux argileux.

## Revendications

1. Un coulis aqueux granulaire, durcissable, injectable, caractérisé en ce qu'il comprend, comme ingrédients essentiels, (a) de fines particules de silice amorphe, communément appelées fumée de silice, ayant une surface spécifique d'au moins 5 $m^2$/g, et (b) de fines particules de chaux éteinte ayant une surface spécifique Blaine d'au moins 8000 $cm^2$/g et une teneur en hydroxyde de calcium ($Ca(OH)_2$ supérieure à 90%.

2. Un coulis selon la revendication 1, caractérisé en ce que le rapport en poids chaux/silice est dans la gamme de 0,2 à 5.

3. Un coulis selon la revendication 2, caractérisé en ce que ledit rapport est dans la gamme de 0,2 à 2.

4. Un coulis selon la revendication 3, caractérisé en ce que ledit rapport vaut environ 0,5.

5. Un coulis selon l'une quelconque des revendications 1 à 4, caractérisé en ce qu'il contient jusqu'à 350 kg de matières solides par $m^3$ de coulis.

6. Un coulis selon l'une quelconque des revendications 1 à 5, caractérisé en ce que la chaux éteinte présente une surface spécifique Blaine d'au moins 10 000 $cm^2$/g et la fumée de silice a une surface spécifique d'au moins 10 $m^2$/g.

7. Un coulis selon l'une quelconque des revendications 1 à 6, caractérisé en ce qu'il contient, en outre, jusqu'à 5% en poids environ d'un activateur de durcissement constitué par une matière basique, par rapport au poids de chaux éteinte.

8. Un coulis selon la revendication 7, caractérisé en ce que l'activateur est choisi parmi la soude, la potasse, les silicates de soude et le carbonate de sodium.

9. Un coulis selon la revendication 1, caractérisé en ce qu'il contient, en outre, une charge inerte ou réactive.

10. Un procédé de consolidation et/ou d'étanchement de sols granulaires fins et de sols finement fissurés par injection dans ses sols d'un coulis aqueux granulaire durcissable, caractérisé en ce que ledit coulis est un coulis tel que défini à l'une quelconque des revendications 1 à 9.

## Patentansprüche

1. Einspritzbarer, härtbarer, körniger wässriger Schlamm, dadurch gekennzeichnet, dass er als wesentliche Bestandteile (a) feine Körner aus amorphem Siliciumoxid, üblicherweise Siliciumoxidrauch genannt, mit einer spezifischen Oberfläche von mindestens 5 $m^2$/g und (b) feine Körner aus gelöschtem Kalk mit einer spezifischen Oberfläche (Blaine) von mindestens 8000 $cm^2$/g und einen Gehalt von Calciumhydroxid $Ca(OH)_2$ von mehr als 90% enthält.

2. Schlamm nach Anspruch 1, dadurch gekennzeichnet, dass das Gewichtsverhältnis Kalk/Siliciumoxid im Bereich von 0,2 bis 5 liegt.

3. Schlamm nach Anspruch 2, dadurch gekennzeichnet, dass das besagte Verhältnis im Bereich von 0,2 bis 2 liegt.

4. Schlamm nach Anspruch 3, dadurch gekennzeichnet, dass das besagte Verhältnis ungefähr 0,5 beträgt.

5. Schlamm nach einem der Ansprüche 1 bis 4, dadurch gekennzeichnet, dass er bis zu 350 kg Feststoffe pro $m^3$ Schlamm enthält.

6. Schlamm nach einem der Ansprüche 1 bis 5, dadurch gekennzeichnet, dass der gelöschte Kalk eine spezifische Oberfläche (Blaine) von mindestens 10 000 cm²/g und der Siliciumoxidrauch eine spezifische Oberfläche von mindestens 10 m²/g besitzt.

7. Schlamm nach einem der Ansprüche 1 bis 6, dadurch gekennzeichnet, dass er ferner ungefähr bis 5 Gew.-% eines von einem basischen Stoff gebildeten Härtungsaktivierungsmittels, bezogen auf das Gewicht des gelöschten Kalkes, enthält.

8. Schlamm nach Anspruch 7, dadurch gekennzeichnet, dass das Aktivierungsmittel aus Soda, Pottasche, den Sodasilikaten und Natriumcarbonat ausgewählt wird.

9. Schlamm nach Anspruch 1, dadurch gekennzeichnet, dass er ferner einen inerten oder reaktionsfähigen Füllstoff enthält.

10. Verfahren zur Verfestigung und/oder Wasserdichtung von feinkörnigen Böden und feinrissigen Böden durch Einspritzen eines härtbaren körnigen Schlamms in diese Böden, dadurch gekennzeichnet, dass der Schlamm ein Schlamm nach einem der Ansprüche 1 bis 9 ist.

**Claims**

1. An injectable, curable, aqueous granular grout, characterized in that it comprises, as essential ingredients, (a) fine particles of amorphous silica, commonly called fumed silica, having a surface area of at least 5 m²/g, and (b) fine particles of slaked lime having a Blaine surface area of at least 8,000 cm²/g and a content of calcium hydroxide Ca(OH)₂ higher than 90%.

2. A grout as claimed in claim 1, characterized in that the lime/silica weight ratio is in the range from 0.2 to 5.

3. A grout as claimed in claim 2, characterized in that said ratio is in the range from 0.2 to 2.

4. A grout as claimed in claim 3, characterized in that said ratio is approximately 0.5.

5. A grout as claimed in any of claims 1 to 4, characterized in that it contains up to 350 kg of solids per m³ of grout.

6. A grout as claimed in any of claims 1 to 5, characterized in that the slaked lime has a Blaine surface area of at least 10,000 cm²/g and the surface area of the fumed silica is at least 10 m²/g.

7. A grout as claimed in any of claims 1 to 6, characterized in that it additionally contains up to approximately 5% by weight of a setting activator consisting of a basic substance, relative to the weight of the slaked lime.

8. A grout as claimed in claim 7, characterized in that the activator is chosen among sodium hydroxide, potassium hydroxide, sodium silicates and sodium carbonate.

9. A grout as claimed in claim 1, characterized in that it additionally contains an inert or reactive filler.

10. A process for consolidating and/or waterproofing fine granular soils and finely fissured soils by injecting into said soils a curable aqueous granular grout, characterized in that said grout is a grout such as defined in any of claims 1 to 9.